Europäisches Patentamt

European Patent Office

Office européen des brevets

(11) Publication number: **0 186 479**
**B1**

# (12) EUROPEAN PATENT SPECIFICATION

(45) Date of publication of patent specification: **23.08.89**

(21) Application number: **85309376.3**

(22) Date of filing: **20.12.85**

(51) Int. Cl.⁴: **B 01 J 29/32,** C 10 G 49/08,
C 10 G 35/095

(54) **Shape selective zeolite catalyst.**

(30) Priority: **27.12.84 US 686766**
**07.02.85 US 699094**

(43) Date of publication of application:
**02.07.86 Bulletin 86/27**

(45) Publication of the grant of the patent:
**23.08.89 Bulletin 89/34**

(84) Designated Contracting States:
**BE DE FR GB IT NL SE**

(56) References cited:
**EP-A-0 038 141**
**US-A-4 218 573**
**US-A-4 344 868**

(73) Proprietor: **MOBIL OIL CORPORATION**
**150 East 42nd Street**
**New York New York 10017 (US)**

(72) Inventor: **Derouane, Eric Gerard**
**56, Rue des Champs Verts**
**B-5020 Namur (Champion) (BE)**
Inventor: **Dessau, Ralph Moritz**
**14, Cellar Road**
**Edison N.J. 08817 (US)**

(74) Representative: **Cooper, John Anthony et al**
**CARPMAELS & RANSFORD 43 Bloomsbury**
**Square**
**London WC1A 2RA (GB)**

Courier Press, Leamington Spa, England.

**Description**

This invention relates to shape-selective zeolite catalysts, which contain a Group VIII metal and are of low acidity, particularly their preparation and their use in various hydrocarbon conversion processes.

Zeolites have been described as possessing a crystal lattice which is a rigid three-dimensional framework of $SiO_4$ and $AlO_4$ tetrahedra cross-linked by the sharing of oxygen atoms, whereby the ratio of the total aluminum and silicon atoms to oxygen atoms is 1:2. The electrovalence of the tetrahedra containing alumina is balanced by the inclusion in the crystal of a cation, for examle an alkali metal, an alkaline earth metal or an organic cation, giving rise to an Al-atom/cationic-valence ratio of unity. The cations are, absent steric hindrance, exchangeable. Their nature can influence catalytic properties. Elements other than aluminum, for instance boron, can participate with silicon in the constitution of a zeolitic lattice. Depending on its lattice geometry, a zeolite may manifest pores of such a size as to exercise a useful molecular sieving effect, controlling access of molecules above a certain effective diameter.

A convenient mesure of the extent to which a zeolite controls access to molecules of varying sizes to its internal structure is the Constraint Index of the zeolite. Zeolites which provide a highly restricted access to and egress from their internal structure have a high Constraint Index: zeolites which provide relatively free access to their internal structure have a low Constraint Index. The method by which Constraint Index is determined is described fully in US—A—4,016,218, to which reference is made for details.

Constraint Index (CI) values for typical "medium" pore zeolites, inlcuding those useful herein, are:

| Crystalline Silicate | CI |
|---|---|
| ZSM—5 | 6—8.3 |
| ZSM—11 | 6—8.7 |
| ZSM—12 | 2 |
| ZSM—23 | 9.1 |
| ZSM—35 | 4.5 |
| ZSM—38 | 2 |
| ZSM—48 | 3.4 |
| Zeolite Beta | 0.6—1+ |

Zeolites ZSM—5, ZSM—11, ZSM—12, ZSM—35, ZSM—38 and Zeolite Beta are defined by the x-ray data set forth in US—A—3,702,886, 3,709,979, 3,832,449, 4,016,245, 4,046,859 and 3,308,069 respectively; zeolite ZSM—48 by that set forth in EP—A—15132; and zeolite ZSM—23 by that set forth in US—A—4,076,842.

The $SiO_2/Al_2O_3$ ratio of a given zeolite is often variable. For example, zeolite X can be synthesized with $SiO_2/Al_2O_3$ ratios of from 2 to 3; zeolite Y, from 3 to about 6. In some zeolites, the upper limit of $SiO_2/Al_2O_3$ ratio is unbounded. ZSM—5 is one such example wherein the $SiO_2/Al_2O_3$ ratio is at least 5, up to infinity. US—A—3,941,871 discloses a porous crystalline silicate made from a reaction mixture containing no deliberately added alumina and exhibiting the x-ray diffraction pattern characteristic of zeolite ZSM—5. US—A—4,061,724, 4,073,865 and 4,104,294 describe crystalline silicates of varying alumina and metal content.

It is well known to incorporate into zeolitic material strong hydrogenation-dehydrogenation metal coponents, as illustrated by metals such a molybdenum, chromium and vanadium, and Group VIII metals such as cobalt, nickel and palladium. Such products are known from US—A—3,201,356, 3,700,585, 3,956,104, 4,148,713, 4,174,272, for example.

Non-aluminosilicate zeolites are described in US—A—4,269,813, 4,327,236, 4,285,919 and 4,331,641, in which boron is introduced into the ZSM—5 lattice structure. GB—A—2,024,790 and 2,033,358 describe ZSM—5 type zeolites in which boron chromium, beryllium, titanium, vanadium, manganese, iron, cobalt, zinc, zirconium, rhodium, silver, tin and antimony have entered the crystal lattice.

Catalysts prepared in accordance with the present invention manifest higher selectivies and operational stabilities, in a wide variety of conversions, than was achievable in the prior art.

It is an object of this invention to provide a method for preparing a crystalline zeolite catalyst composition which contains a shape-selective metal function and which exhibits a reduced acid activity, notably a composition which exhibits an x-ray diffraction pattern characteristic of ZSM—5 or ZSM—11 and which has a high capacity for ion-exchanging metal cations.

It is a further object to provide a process for the production of aromatic hydrocarbons from paraffinic feedstock in the presence of such a catalyst.

EP 0 186 479 B1

According to the invention a method of preparing a shape-selective zeolite catalyst composition of reduced acidity comprises:

(1) calcining an as-synthesized crystalline zeolite having a silica-alumina ratio of at least 12 and a constraint index of 1 to 12 at a temperature between 200 and 600°C for between 1 and 48 hours;

(2) contacting the calcined zeolite with an aqueous solution of a Group VIII metal compound;

(3) thermally treating the resulting Group VIII metal-containing zeolite at a temperature of 150° to 550°C; and

(4) base-exchanging the zeolite with Group IA metal cations.

Preferably the Group VIII metal is platinum or palladium, although it may comprise platinum and at least one other Group VIII metal. The thermal treating may be conducted in the presence of molecular oxygen, olefinically unsaturated hydrocarbon, hydrogen or inert gas.

The zeolite is preferably ZSM—5 or ZSM—11, advantageously of silica/alumina mole ratio greater than 500, and is not necessarily an aluminosilicate: borosilicate forms of zeolites are, for instance, contemplated. A suitable quantity of Gp. VIII metal in the product composition is 0.01 to 10% wt.

Catalysts prepared according to the invention are useful in the conversion of hydrocarbons, notably in hydrocracking, hydroisomerisation or dehydrocyclisation of paraffins, shape-selective dehydrogenation of naphthenes and shape selective dewaxing of waxy feedstocks.

A preferred zeolite catalyst composition of the present invention is one comprising crystalline silica which exhibits an x-ray diffraction pattern characteristic of zeolite ZSM—5 or ZSM—11, which contains between about 0.01 and 10 wt.% of shape-selective functioning intrazeolitic Group VIII metal, and which is substantially free of base-exchangeable acidic content. ZSM—23, ZSM—35 and ZSM—38 type of zeolite structures are also preferred zeolite structures.

The term "intrazeolitic", as employed herein with respect to metal content, refers to the metal contained within the internal cavities and channels and pores characteristic of a crystalline zeolite structure. The term "zeolite", as employed herein, includes crystalline, ultra high silica aluminosilicate and crystalline silica compositions, notably those of greater than 500, and even of greater than 10,000, silica/alumina mole ratio. The term "acid-acitivity", as employed herein, refers to the catalytic effect exhibited by the acidic function of a zeolite in hydrocarbon conversion processes.

Catalysts prepared according to the present invention exhibit shape-selective hydrogenation, dehydrogenation and dehydrocyclization activities. Their advantageousness is attributable partly to the relative absence of acidic content, and partly to the presence of Group VIII metal which is distributed within the intrazeolitic structure. The Group VIII metal is situated within the internal channels and pores of the zeolite. The intrazeolitic Group VIII metal is capable of catalyzing shape-selective hydrogenolysis, dehydrogenation and aromatization reactions of mixed hydrocarbon feeds.

Further, because of the intrazeolitic nature of the Group VIII metal content, catalysts according to the present invention exhibit increased resistance to bulky poisons (such as tri-p-tolyphosphine) and reduced aging, relative to other types of supported Group VIII metal catalyst compositions.

We speculate that there are at least two factors which account for their shape-selectivity.

First, the high silica zeolitic substrate in the calcined as-synthesized form has an unusual capability to ion-exchange Group VIII metal. A severalfold excess of Group VIII metal cations can be incorporated in the zeolite, over the quantity theoretically projected on the basis of the aluminum content of the zeolite. For example, ZSM—5 of 600 silica/alumina ratio has an aluminum content of 0.05 millimoles per gram of zeolite. Yet the excess ion-exchange capacity of the zeolitic substrate permits the incorporation of 0.38 milliequivalents of platinum per gram of zeolite, or 0.33 milliequivalents of palladium per gram of zeolite. It is believed that such excess iron-exchange capacity may be attributable to the presence of ion-excangeable silicate ions occluded within the intrazeolitic structure.

As a second factor which is important for the provision of shape-selective reactivity, it appears that thermal treatment of the Group VIII metal-containing zeolite does not cause any substantial migration of the internally disposed metal atoms out of the intrazeolitic matrix to the crystal surface. Externally situated metal atoms do not have the shape-selective reactivity required of the present invention.

Preferred catalysts prepared according to the invention exhibit a shape-selective metal function manifested by their ability to convert linear $C_6$—$C_{50}$ hydrocarbons to aromatics more readily than cyclic hydrocarbons convert to aromatics, that is, with a linear/cyclic hydrocarbon conversion ratio of greater than 1.0. They thus differentiate themselves from the prior art, where shape-selective acid reactivity is sought.

The shape-selective metal function of a catalyst can be quantitified by either of the following tests:

1. An equimolar mixture of n-heptane and cyclohexane in a nitrogen stream is passed over the catalyst at 500°C. A catalyst has a marked shape-selective metal function under the test conditions if the conversion of n-heptane is greater than the conversion of cyclohexane, while the aromatic product derived from n-heptane exceeds the aromatic product derived from cyclohexane.

2. An equimolar mixture of 1,2-dimethylcyclohexane and 1,4-dimethytlcyclohexane in a hydrogen stream is passed over the catalyst at 350° to 400°C. A catalyst has a marked shape-selective metal function under the test conditions if the molar ratio of p-xylene to o-xylene in the product is greater than 2.0 at less than 50% conversion of the 1,4-isomer.

When an olefinically-unsaturated hydrocarbon is employed in the thermal treatment, it is selected from

3

acyclic and cyclic mono- and poly-unsaturated $C_3$—$C_{20}$ alkenes and alkynes. The preferred olefinically-unsaturated hydrocarbons are acyclic and cyclic $C_3$—$C_{12}$ mono-unsaturated alkenes.

Illustrative of suitable olefinically-unsaturated hydrocarbons are propene, 2-methylpropene, butene, butadiene, pentene, pentadiene, hexene, heptene, octadiene, dodecene, propyne, hexyne, cyclopentene, cyclopentadiene, cyclohexene, vinylcyclohexene and cycloheptene.

The base-exchange with Group IA metallic cations, such as lithium, sodium, potassium or cesium, is for the purpose of reducing the acidity of the Group VIII metal-containing zeolite substrate, for example, acidic sites generated during the thermal treatment.

The base-exchange can be accomplished by slurrying the material in an aqueous solution of a suitable Group IA compound, such as sodium hydroxide, potassium chloride, cesium hydroxide and the like. As desired, the base-exchange can be achieved to a lesser or greater degree. For example, the base-exchange can be accomplished under selected conditions of reagent concentration, pH, contact time and the like, so as to eliminate substantially the base-exchangeable acidic content. Such a base-exchanged material is essentially "non-acidic", and exhibits substantially no acid-catalyzed reactivity when employed as a catalyst in hydrocarbon conversion systems. The base-exchanged material can be recovered from the base-exchange medium and dried in a conventional manner.

Catalysts prepared by the present invention can be formed into a wide variety of particles. Generally speaking, the particles can be in the form of a powder, a granule, or a molded product, such as an extrudate having a particle size sufficient to pass through a 2 mesh (Tyler) screen and be retained on a 400 mesh (Tyler) screen. In cases where the catalyst is molded, such as by extrusion, it can be extruded before drying or partially dried and then extruded.

The catalysts are particularly attractive for production of silica bound aggregates. However, other refractory oxides can also be used, such as alumina, zirconia, magnesia, titania, and the like. The manner of binding is conventional and known to those skilled in the art.

Catalysts of the present invention are particularly useful for hydrocarbon conversions. In particular, these catalysts can be used for hydrogenation of olefinis, dehydrogenation of paraffins, reforming and dewaxing; for the hydrogenolysis of n-paraffins to lower molecular weight products, the dehydrocyclization and aromatization of hydrocarbons, the aromatization of naphthas, the up-grading of low-octane reformate; and the producton of aromatic hydrocarbons by contacting a $C_6$—$C_{50}$ hydrocarbon feedstock with the catalyst under reforming conditions.

Such a $C_6$—$C_{50}$ hydrocarbon feedstock can comprise single components, such as hexane, cyclohexane or decane, or it can comprise mixtures such as petroleum refinery distillates which contain both acrylic and cyclic alkane and alkene components. A preferred type of feedstock is one which contains at least 20 wt. % of acrylic hydrocarbons, and which does not contain more than a minor proportion of $C_1$—$C_5$ hydrocarbons.

Optimal efficiency is achieved when the process is operated continuously by passage of the $C_6$—$C_{50}$ hydrocarbon feedstock in vapor phase through a bed of zeolite catalyst in a reforming zone, maintained at a temperature between about 375°—575°C. The pressure in the system can be subatmospheric, atmospheric or superatmospheric. The pressure normally will be in the range between about 50—500 psi (3,4—34,4 bars). Preferred WHSV is 0.2 to 5.

The feedstream passing through the reforming zone can include added hydrogen, although it is highly advantageous to conduct the reforming reaction in the absence of added hydrogen, and particularly in the presence of an inert gas. The partial pressure of the added inert gas can vary between 5 and 500 psi (0,34—34,4 bars). In the presence of an inert gas, such as nitrogen or steam, the ratio of aromatics to hydrocracked paraffinic products increases and a high yield of hydrogen is obtained.

A particularly significant aspect of the process described above is the dehydrogenation-dehydrocyclization, which is effected by the novel type of shape-selective metal function possessed by the low-acidity catalyst employed. Thus, when a mixture of normal and branched chain paraffins are subjected to reforming, the normal paraffins are substantially converted, while the branched chain paraffins remain substantially unconverted. As a further illustration, using such a catalyst, 1,4-dialkylcyclohexane is preferentially dehydrogenated to the corresponding 1,4-dialkylbenzene, with a severalfold selectivity factor in comparison to the dehydrogenation of 1,2-dialkylcyclohexane to 1,2-dialkylbenzene.

In other embodiments, catalysts prepared according to the invention may be used for upgrading a petroleum fraction by contacting low octane reformate with the catalyst under reforming conditions; for hydrogenolysis of hydrocarbons by contacting a heated stream of paraffinic feedstock and hydrogen with the catalyst; for dehydrogenation of hydrocarbons by contacting a heated stream of paraffinic feedstock with the catalyst; and for hydrogenation of hydrocarbons by contacting a heated stream of olefinically unsaturated hydrocarbon feedstock and hydrogen with the catalyst.

The following examples are further illustrative of the present invention.

## Example 1

This Example illustrates the preparation of a Group VIII metal-containing crystalline high silica/alumina ratio zeolite catalyst composition in accordance with the present invention.

An as-synthesized ZSM—5 zeolite is calcined in air to 538°C at about 1.0°C per minute rate, and maintained at 538°C for about 10 hours. The silica-alumina of the as-synthesized zeolite is about 7000, and the sodium content is 0.42%.

A 3.0 gram quantity of calcined zeolite is slurried with a solution of 0.312 gram of $Pt(NH_3)_4Cl_2 \cdot H_2O$ in 300 milliliters of water for four hours at room temperature. The platinum -tetraamine exchanged zeolite is filtered and washed to yield a composition containing 0.110 meq N/gram ash, which is equivalent to 0.055 meg Pt/gram ash or 0.54% Pt content in the zeolite composition.

The platinum-containing zeolite is reduced in a stream of nitrogen and hexane-1, while the temperature is raised to 450°C at 2°C per minute.

As a final step, the reduced platinum-containing zeolite is slurried in 100 milliliters of 3% potassium hydroxide solution at room temperature, with intermittent stirring over a period of 10 hours. The base-exchanged zeolite is recovered, washed with water, and dried at 110°C.

Example 2

This Example illustrates the excess ion-exchange capacity of the present invention high silica zeolites.

In the manner of Example 1, the group of zeolites listed in Table 1 are ion-exchanged with platinum by slurrying the calcined zeolite with a solution of $Pt(NH_3)_4Cl_2 \cdot H_2O$ is an aqueous medium at room temperature over a period of four hours.

As a reference point, a silica-alumina ratio of 500 is equivalent to 0.18 weight percent aluminum (1800 ppm of aluminum).

TABLE 1

| Zeolite | $SiO_2/Al_2O_3$ | Al, mm/g | Ion-exchange Capacity Pt, meg/g |
|---------|------------------|----------|----------------------------------|
| ZSM—5 | 1,670 | 0.02 | 0.25 |
| ZSM—5 | 26,000 | 0.001 | 0.42 |
| ZSM—11 | 1,056 | 0.03 | 0.32 |

Example 3

This Example illustrates the application of present invention zeolite catalyst compositions (prepared as in Example 1) to shape-selective conversions of various hydrocarbon mixtures.

The indicated cesium-containing catalysts are produced by the same procedure as Example 1, except that the Group VIII metal-containing zeolite intermediate is back ion-exchanged with 100 milliliters of 3% cesium chloride solution after thermal treatment in air.

For the platinum-catalyzed conversion of n-paraffin, the reaction is conducted in a downflow glass reactor packed with about 2.0 grams of zeolite catalyst composition, at 400°—450°C and atmospheric pressure. The paraffin is fed via a Sage Syringe pump at 0.4—1 WHSV in a flow of hydrogen ($H_2$/HC of 5—8). The reactor effluent is monitored by on-line vapor phase chromatography employing an OV101 capillary column. The reaction products are identified by GC—MS.

A. Shape-selective Hydrogenolysis

A mixture containing n-hexadecane, 2,6,10,14-tetramethylpentadecane (pristane) and hydrogen is passed over a Pt/ZSM—5 catalyst at 450°C. Shape-selective hydrogenolysis of the mixture is observed, as indicated by greater than 65% conversion of n-hexadecane and less than 10% conversion of the pristine (i.e., a selectivity factor greater than 10) to lower paraffins.

B. Shape-selective Dehydrogenation

An equimolar mixture of 1,2-dimethylcyclohexane and 1,4-dimethylcyclohexane in hydrogen is contacted at 350°—400°C with the respective catalysts listed in Table 2.

The present invention zeolite catalyst exhibits shape-selective dehydrogenation to p-xylene while the conventional platinum on alumina catalyst does not.

C. Shape-selective Aromatization

An equimolar mixture of a normal paraffin and a cyclohexane in nitrogen is contacted at 500°C with a present invention shape-selective cesium back ion-exchanged Pt/ZSM—5 catalyst (Runs 1—2).

The results in Table 3 indicate that preferential conversion of the normal paraffin component occurs. Also, listed in Table 3 are the results obtained (Runs 3—4) with a platinum-on-carbon catalyst which is not shape-selective in its reactivity.

TABLE 2

| Catalyst | Selectivity (p/o-xylene) | T°C | WHSV | % Conversion | |
| | | | | p-xylene | o-xylene |
|---|---|---|---|---|---|
| 1.7% Pt/Cs—ZSM—5 | 11.1 | 365 | 1.7 | 79.3 | 13.2 |
| 0.8% Pt/Al$_2$O$_3$ (Engelhard) | 0.84 | 374 | 1.6 | 14.3 | 16.7 |

TABLE 3

| Run | Feed | Weight Percent | Percent Conversion | Composition of Product Effluent | Percent of Total Effluent |
|---|---|---|---|---|---|
| 1 | n-hexane | 43.4 | 69 | benzene | 28.2 |
| | ethylcyclohexane | 56.6 | 28 | ethylbenzene | 1.6 |
| 2 | n-heptane | 54.4 | 85 | toluene | 31.8 |
| | cyclohexane | 45.6 | 15.3 | benzene | 5.3 |
| 3 | n-hexane | 43.4 | 10.6 | benzene | 2.5 |
| | ethylcyclohexane | 56.6 | 26 | ethylbenzene | 11.8 |
| 4 | n-heptane | 54.4 | 33 | toluene | 10.4 |
| | cyclohexane | 45.6 | 28.5 | benzene | 15.6 |

Example 4

This Example illustrates the application of a present invention high silica zeolite catalyst composition (prepared as in Example 1) for dewaxingreforming of a petroleum fraction.

An Arab light distillate cut (400°—650°F) is passed over a 0.54% Pt/ZSM—5 catalyst at 465°C and 0.4 WHSV in a stream of hydrogen at atmospheric pressure.

GC—MS analysis of the liquid product indicates a decrease in paraffins and an increase in the aromatic to aliphatic carbon ratio from 0.15 to 0.22. The micro pour point of the recovered product (96% yield) is −42°C, as compared to −20°C for the distillate feedstock.

Example 5

This Example illustrates the application of a present invention zeolite catalyst composition (prepared as in Example 1) dehydrogenation of a lower n-paraffin.

A stream of propane is passed over a Pt/ZSM—5 catalyst at 550°—575°C and atmospheric pressure and with a WHSV of 1.3.

GC—MS analysis of the product effluent indicates a 30% conversion of propane, with an 85% selectivity to propylene.

The use of a present invention catalyst composition for purposes of n-paraffin dehydrogenation is advantageous in that it has superior ageing characteristics and therefore does not require frequent regeneration.

Example 6

This Example illustrates the application of a present invention zeolite catalyst composition (prepared as in Example 1) for reforming of hydrotreated naphtha.

Pt(NH$_3$)$_4$Cl$_2$·H$_2$O is employed to ion-exchange a 26,000:1 SiO$_2$—Al$_2$O$_3$ ZSM—5 zeolite substrate. The platinum-containing zeolite is reduced with a stream of hexene-1 and nitrogen, while the temperature is raised at 1°C per minutes to 500°C. The final catalyst has a 1.5% platinum content after base-exchange with cesium chloride.

The naphtha feed is passed through 3.4 grams of the catalyst under the following conditions:

Naphtha feed rate, 2 ml/hr.
Hydrogen flow rate, 10 cc/min.
Reaction Temp., 500°C
Atmospheric Pressure
Liquid Product collected at 0°C.
Liquid Recovery, 72 wt%.

The composition and RON of the naphtha feed and the reformed product are as follows:

| Weight, % | Naphtha Feed | Reformed Product |
|---|---|---|
| n-Hexane | 8.7 | 0.6 |
| n-Heptane | 9.1 | 1.2 |
| n-Octane | 7.9 | 1.4 |
| N-Nonane | 6.6 | 1.5 |
| Benzene | 0.6 | 13.7 |
| Toluene | 2.0 | 10.2 |
| RON (unleaded) | 38 | 81 |

Example 7

This Example illustrates the application of a bimetallic form of a present invention zeolite catalyst composition for reforming of hydrotreated naphta.

A ZSM—5 substrate is ion-exchanged with $Pt(NH_3)_4Cl \cdot H_2O$ in the manner of Example 6, then the platinum-exchanged zeolite is impregnated with $H_2IrCl_4$ to yield a catalyst precursor which contains 1.4% platinum and 0.35% iridium. The catalyst is thermally treated in air, and then base-exchanged with sodium carbonate.

The hydrotreated naphtha feed is passed through the bimetallic zeolite catalyst at 530°C and atmospheric pressure and with a WHSV of 2.

The composition and RON of the naphtha feed and reformed product are as follows:

| Weight, % | Naphtha Feed | Reformed Product |
|---|---|---|
| n-Hexane | 8.7 | 1.7 |
| n-Heptane | 9.1 | 1.6 |
| Benzene | 0.6 | 5.3 |
| Toluene | 2.0 | 8.3 |
| RON (unleaded) | 38 | 87 |

Similar results are obtained when the bimetallic components of the catalysts are 0.01—10 weight percent platinum and 0.01—5 weight percent rhodium, or 0.01—10 weight percent platinum and 0.01—5 weight percent rhenium.

Example 8

This Example illustrates a comparison between Group VIII metal-containing zeolite catalyst compositions, with and without base-exchange treatment, in hydrocarbon conversions.

A. Comparison Catalyst

A 26,000:1 $SiO_2/Al_2O_3$ as-synthesized ZSM—5 is calcined in nitrogen to 538°C at 1°C/min, and again in air to 538°C.

The calcined zeolite is slurried in an aqueous solution of $Pt(NH_3)_4Cl_2 \cdot H_2O$ at room temperature for several hours, filtered, and washed to provide a ZSM—5 zeolite containing 3.6% Pt.

The Pt/ZSM—5 zeolite is then heated in an oxygen stream to 300°C at a rate of 0.5°C/min, and maintained at 300°C for one hour.

This catalyst exhibits shape-selective dehydrogenation of 1,4-dimethylcyclohexane relative to 1,2-dimethylcyclohexane. At 370°C, the ratio of p-xylene to o-xylene produced is greater than 10:1.

B. Base-exchanged Catalyst

Calcined Pt/ZSM—5 catalyst prepared as above is slurried in a solution of cesium hydroxide (pH 11.8) at room temperature for one hour, and is then filtered without washing. This base-exchanged zeolite in accordance with the present invention is compared with Catalyst A which has not been base-exchanged, with respect to acid-catalyzed reactivity in hydrocarbon conversions.

7

C. Olefin Hydrogenation

An equimolar mixture of hexene-1 and 4,4-dimethylhexene-1 in a hydrogen stream is contacted with the respective catalyst at a temperature of 300°C.

| Catalyst | % Cracking | % Hexene-1 Hydrogenated | % 4,4-Dimethylhexene Hydrogenated |
|---|---|---|---|
| A | 1.0 | 90.8 | 22.7 |
| B | <0.1 | 95.5 | 18.2 |

This comparison illustrates the lower acid-catalyzed cracking activity exhibited by a present invention base-exchanged Group VIII metal-containing zeolite catalyst composition.

The term "base-exchanged" as employed herein refers to a zeolite substrate which has had its acidic content reduced by ion-exchange with Group IA metal cations subsequent to the inclusion of a Group VIIIA metal and subsequent to thermal treatment of the Group VIIIA metal-containing zeolite substrate.

Example 9

This Example illustrates a comparison between Group VIII metal-containing zeolite catalyst compositions, with and without base-exchange treatment, in n-hexane dehydrocyclization.

The aromatization reaction is conducted at 465°C in a nitrogen stream.

Catalyst A and Catalyst B are those described in Example 8. Catalyst C is prepared in a similar manner, and is not base-exchanged, while Catalyst D is a cesium base-exchanged Pt/ZSM—5 in accordance with the present invention.

| Catalyst | $SiO_2/Al_2O_3$ | % Selectivity To Benzene |
|---|---|---|
| A | 26,000 | 58 |
| B (base-exchanged) | 26,000 | 86 |
| C | 70 | 5 |
| D (base-exchanged) | 70 | 60 |

The prfesent invention Catalyst B above is effective for achieving greater than 99% conversion of n-hexane with an 86% selectivity to benzene. The present invention Catalyst D also is a superior catalyst for the n-hexane aromatization reaction, in comparison with Catalyst C which has not been base-exchanged in accordance with the present invention.

**Claims**

1. A method of preparing a shape-selective zeolite catalyst composition of reduced acidity which comprises:
(1) calcining an as-synthesized crystalline zeolite having a silica-alumina ratio of at least 12 and a constraint index of 1 to 12 at a temperature between 200 and 600°C for between 1 and 48 hours;
(2) contacting the calcined zeolite with an aqueous solution of a Group VIII metal compound;
(3) thermally treating the resulting Group VIII metal-containing zeolite at a temperature of 150° to 550°C; and
(4) base-exchanging the zeolite with Group IA metal cations.

2. A method according to claim 1 wherein the Group VIII metal is platinum or palladium.

3. A method according to claim 1 or claim 2 wherein the Group VIII metal comprises platinum and at least one other Group VIII metal.

4. A method according to any preceding claim wherein the said thermal treating is conducted in the presence of molecular oxygen, olefinically unsaturated hydrocarbon, hydrogen or inert gas.

5. A method according to any preceding claim wherein the zeolite is ZSM—5 or ZSM—11.

6. A method according to any preceding claim wherein the base-exchanged zeolite contains 0.01 to 10% wt. of Group VIII metal.

7. A method according to any preceding claim wherein the zeolite has a silica/alumina ratio greater than 500.

## EP 0 186 479 B1

8. A method according to any preceding claim wherein the zeolite contains tetrahedrally coordinated boron.

9. A catalyst prepared by the method claimed in any of claims 1 to 8.

10. Use of a catalyst as claimed in claim 9 in a process for the conversion of hydrocarbons.

11. Use according to claim 10 wherein the conversion is the hydrocracking, hydroisomerisation or dehydrocyclisation of paraffins.

12. Use according to claim 10 wherein the conversion is the shape-selective dehydrogenation of naphthenes or the shape selective dewaxing of waxy feedstocks.

## Patentansprüche

1. Verfahren zur Herstellung einer formselektiven Zeolith-Katalysatorzusammensetzung mit verringerter Acidität, welches umfaßt:

1) Kalzinieren des kristallinen Zeolith im synthetisierten, der ein Siliciumdioxid/Aluminiumoxid-Verhältnis von mindestens 12 und einen Zwangsindex von 1 bis 12 aufweist, bei einer Temperature zwschen 200 und 600°C, 1 bis 48 Stunden lang,

2) Kontakt des kalzinierten Zeolith mit einer wässrigen Lösung einer Verbindung eines Metalls der Gruppe VIII,

3) Wärmebhandlung des resultierenden Zeolith, der ein Metall der Gruppe VIII enthält, bei einer Temperatur von 150°C bis 550°C und

4) Basenaustausch des Zeolith mit Metallkationen der Gruppe IA.

2. Verfahen nach Anspruch 1, worin das Metall der Gruppe VIII Platin ode Palladium ist.

3. Verfahren nach Anspruch 1 oder 2, worin das Metall der Gruppe VIII Platin und mindestens ein Anderes Metall der Gruppe VIII umfaßt.

4. Verfahren nach einem der vorstehenden Ansprüche, worin die Wärmebehandlung in Gegenwart von molekularem Sauerstoff, olefinisch ungestättigtem Kohlenwasserstoff, Wasserstoff oder einem Inertgas durchgeführt wird.

5. Verfahren nach einem der vorstehenden Ansprüche, worin der Zeolith ZSM—5 oder ZSM—11 ist.

6. Verfahren nach einem der vorstehenden Ansprüche, worin der basenausgetauschte Zeolith 0,01 bis 10 Gew% des Metalls der Gruppe VIII enthält.

7. Verfahren nach einem der vorstehenden Ansprüche, worin der Zeolith ein Siliciumdioxid/Aluminiumoxid-Verhältnis von mehr als 500 aufweist.

8. Verfahren nach einem der vorstehenden Ansprüche, worin der Zeolith tetraedrisch koordiniertes Bor enthält.

9. Katalysator, der nach dem Verfahren nach einem der Ansprüche 1 bis 8 hergestellt wurde.

10. Verwendung des Katalysators nach Anspruch 9 in einem Verfahren zur Umwandlung von Kohlenwasserstoffen.

11. Verwendung nach Anspruch 10, worin die Umwandlung das Hydrocracken, eine Hydroisomerisierung oder eine Dehydrozyklisierung von Paraffinen ist.

12. Verwendung nach Anspruch 10, worin die Umwandlung die formselektive Dehydrierung von Naphthenen oder die formselektive Entparaffinierung paraffinischer Ausgangsmaterialien ist.

## Revendications

1. Procédé de préparation d'une composition de catalyseur zéolitique sélective quant à la forme et ayant une activité acide réduite, caractérisé en ce qu'il comprend:

(1) la calcination d'une zéolite cristalline telle qu'elle est synthétisée ayant un rapport de silice-alumine d'au moins 12 et un indice de contrainte de 1 à 12 à une température entre 200 et 600°C pendant de 1 à 48 heures;

(2) la mise en contact de la zéolite calcinée avec une solution aqueuse d'un composé d'un métal du Groupe VIII;

(3) le traitement thermique de la zéolite résultante contenant le métal du Groupe VIII à une température de 150° à 550°C; et

(4) la soumission de la zéolite à un échange de base avec des cations métalliques du Groupe IA.

2. Procédé suivant la revendication 1, caractérisé en ce que le métal du Groupe VIII est le platine ou le palladium.

3. Procédé suivant la revendication 1 ou la revendiction 2, caractérisé en ce que le métal du Groupe VIII comprend le platine et au moins un autre métal du Groupe VIII.

4. Procédé suivant l'une quelconque des revendications précédentes, caractérisé en ce que le traitement thermique est effectué en présence d'oxygène moléculaire, d'hydrocarbure insaturé oléfiniquement, d'hydrogène ou de gaz inerte.

5. Procédé suivant l'une quelconque des revendications précédentes, caractérisé en ce que la zéolite est une ZSM—5 ou une ZSM—11.

6. Procédé suivant l'une quelconque des revendications précédentes, caractérisé en ce que la zéolite échangée avec une base contient de 0,01 à 10% en poids de métal du Groupe VIII.

7. Procédé suivant l'une quelconque des revendications précédentes, caractérisé en ce que la zéolite a un rapport silice/alumine supérieur à 500.

8. Procédé suivant l'une quelconque des revendications précédentes, caractérisé en ce que la zéolite contient du bore coordonné de façon tétraédrique.

9. Catalyseur, caractérisé en ce qu'il est préparé suivant l'une quelconque des revendications précédentes.

10. Utilisation d'un catalyseur selon la revendiction 9 dans un procédé pour la conversion d'hydrocarbures.

11. Utilisation suivant la revendication 10, caractérisée en ce que la conversion est l'hydrocraquage, l'hydroisomérisation ou la déshydrocyclisation des paraffines.

12. Utilisation suivant la revendication 10, caractérisée en ce que la conversion est la déshydrogénation sélective quant à la forme de naphthènes ou le déparaffinage sélectif quant à la forme de charges d'alimentation paraffiniques.